# FASCICULE DE BREVET EUROPEEN

(11) **EP 0 638 408 B1**
(45) Date de publication et mention de la délivrance du brevet: **27.05.1998**
(21) Numéro de dépôt: 94401722.7
(22) Date de dépôt: 27.07.1994
(51) Int. Cl.: B29C 47/02, B29C 47/12

(54) **Procédé et dispositif de fabrication d'un vitrage pourvu d'un encadrement en polymère**
Verfahren und Vorrichtung zur Herstellung einer mit einem angeformten Rahmen aus einem thermoplastischen Polymer versehene Glasscheibe
Method and apparatus for making a window panel with a frame of polymeric material

(30) Priorité: 09.08.1993 DE 4326650
(43) Date de publication de la demande: 15.02.1995
(73) Titulaire: SAINT-GOBAIN VITRAGE, 92400 Courbevoie (FR)
(72) Inventeur: Cornils, Gerd, D-52399 Merzenich (DE); Joeris, Herbert, D-52146 Würselen (DE); Kotte, Rolf, Dr., D-52477 Alsdorf (DE); Scholl, Heinz, D-52249 Eschweiler (DE)
(74) Mandataire: Muller, René

(56) Documents cités:
- EP-A- 0 028 284
- EP-A- 0 127 546
- EP-A- 0 354 481
- EP-A- 0 444 998
- EP-A- 0 479 677
- EP-A- 0 493 068
- GB-A- 2 099 688

## Description

La présente invention concerne un procédé de fabrication d'un objet en forme de plaque, pourvu d'un encadrement en polymère mis en place par moulage, en particulier un vitrage. Elle concerne, en outre, des dispositifs appropriés servant à appliquer ce procédé.

On sait qu'il est possible d'équiper des vitrages d'un encadrement fait d'un polymère suivant le bord du vitrage, en engageant le vitrage entre deux demi-moules dans lesquels ont été ménagées des cavités de moulage correspondant au profil voulu pour l'encadrement et, après fermeture des demi-moules, en remplissant les cavités de moulage d'un polymère thermoplastique fondu ou des réactifs de polymérisation. On emploie à grande échelle des procédés de ce genre. Ils sont décrits, par exemple, dans les publications EP 0 127 546, EP 0 145 443, EP 0 333 538, DE 1 945 291, DE 3 714 176, DE 3 920 925, US 4 732 553 et US 4 830 804. Les procédés de ce genre exigent des moules coûteux. En raison des coûts considérables dus aux moules, ils ne sont pas rentables pour les petites séries.

Suivant un autre procédé connu, des profilés pour encadrement ou des éléments d'encadrement faits d'un polymère sont mis en place par moulage sur le vitrage à l'aide du procédé d'extrusion. Dans ce cas aussi, des réactifs, comme des réactifs pour polyuréthannes durcissables à l'humidité ou des polymères thermoplastiques peuvent être employés. Des procédés de ce genre sont connus, par exemple, par les textes de brevets européens ou de demandes de brevets européens 0 121 481, 0 258 128, 0 345 134, 0 421 833, 0 444 998, 0 479 677, 0 494 824, 0 524 060, 0 524 092, 0 531 201 et 0 537 067. Avec ces procédés connus, le boudin de polymère extrudé à l'aide d'une filière d'extrusion est déposé sur l'une des surfaces principales du vitrage, le long de son périmètre.

On a, en outre, proposé de réaliser un vitrage pourvu d'un encadrement fait d'un polymère en posant le vitrage sur une forme inférieure qui s'applique sur la surface inférieure du vitrage dans la partie périphérique de ce dernier et qui, au-delà de la surface périphérique du vitrage, constitue un prolongement de la surface du vitrage, et en extrudant, à l'aide d'une filière d'extrusion, sur le bord du vitrage, un boudin profilé qui fait saillie au-delà de la surface périphérique du vitrage et qui est limité par la surface du moule (DE-C-4 232 554). De cette façon, le vitrage est pourvu par moulage d'un encadrement en polymère, qui est moulé en forme de L sur la surface principale intérieure et sur la surface périphérique du vitrage et qui, au niveau de la surface principale extérieure, c'est-à-dire la face extérieure du vitrage, se termine au ras de cette surface extérieure du vitrage.

Le document EP-A-0 493 068 présente une méthode d'extrusion pour réaliser un vitrage équipé d'un cadre périphérique enchâssant les bords du vitrage sur ses deux surfaces et son chant. La technique décrite utilise une filière d'extrusion fixe qui possède une ouverture latérale dans laquelle on introduit le bord du vitrage. La forme externe du cordon est donnée par la section de la buse par où le matériau est extrudé lorsque le vitrage est entrainé devant la filière. Les surfaces internes supérieure et inférieure de l'ouverture latérale sont équipées d'éléments de protection fixes faits d'un caoutchouc qui peut se comprimer élastiquement.

Le document EP-A-0 493 068 décrit un procédé comprenant les étapes a), b) et d) de la revendication 1 ainsi qu'un dispositif ayant les caractéristiques du préambule de la revendication 4.

Dans la demande de brevet EP-A-0 127 546, on présente un moule en deux parties destiné à permettre l'encapsulation d'un vitrage, c'est-à-dire l'injection sous haute pression d'un polymère destiné à créer à la périphérie du vitrage un cadre en élastomère. L'invention concerne un joint supplémentaire logé dans les plateaux du moule et présentant une élasticité dans une direction perpendiculaire au vitrage pour absorber ses variations de forme tout en présentant une rigidité suffisante pour supporter la pression d'injection de la matière plastique. Un exemple de réalisation montre de façon très schématique une coupe des plateaux d'un moule où une gorge périphérique a été ménagée pour servir de logement à un joint métallique recouvert d'une couche de Téflon et associé à des ressorts destinés à assurer la souplesse souhaitée.

L'invention a pour but de procurer un procédé de fabrication d'un vitrage avec un encadrement en polymère, mis en place par moulage, qui enserre le bord du vitrage au moins sur deux côtés, c'est-à-dire au moins sur l'une des surfaces principales et sur la face périphérique, ce procédé devant convenir aussi pour la production de petites séries.

Selon le procédé de l'invention, on fabrique un vitrage avec un encadrement en polymère, mis en place par moulage, qui enserre le vitrage sur au moins deux côtés présentant les étapes suivantes :
a) on présente le vitrage au poste de travail où il est maintenu immobile à l'aide d'un dispositif de support, son bord dépassant librement des surfaces d'appui du support,
b) on approche une filière d'extrusion du bord du vitrage, celle-ci possédant une échancrure avec une section en forme de U dans laquelle s'engage le bord du vitrage,
c) on presse contre au moins une surface du vitrage une réglette mobile dont la paroi limite l'ouverture du U de la filière, la paroi arrière de celle-ci possédant l'orifice calibré qui détermine la section transversale du cordon de polymère extrudé,
d) après avoir enclenché l'écoulement du polymère, on déplace la filière en lui faisant suivre le bord du vitrage,
e) au terme de l'opération d'extrusion, on ramène la réglette mobile dans sa position finale écartée et la filière dans sa position de repos à côté du vitrage.

Le procédé de l'invention tire donc parti des avantages connus du procédé d'extrusion pour doter des vitrages d'un encadrement mis en place par moulage et fait d'un polymère, encadrement qui, jusqu'à présent, était réalisé essentiellement à l'aide de procédés analogues au moulage par injection, avec des moules compliqués et de grandes dimensions ou, dans le cas de l'extrusion, avec difficulté. Avec des robots de manutention modernes, il est possible de réaliser la commande de parcours de la tête d'extrusion tout autour du vitrage avec une précision telle, qu'avec les dispositifs de l'invention, on peut produire des vitrages pourvus de cette façon d'un encadrement, dont le contour extérieur présente des tolérances très serrées. De cette manière, il est même possible de compenser d'inévitables tolérances sur les cotes des vitrages, de telle sorte que la précision des cotes des vitrages pourvus de leur encadrement est supérieure à celle des vitrages eux-mêmes. Il est même possible d'utiliser des vitrages présentant de plus grandes tolérances des cotes, sans que cela influe sur les dimensions finales du vitrage avec son encadrement. L'avantage du procédé de l'invention qui présente une importance particulière réside toutefois dans le fait que, sans aucune modification des outils d'extrusion, on peut équiper d'un encadrement mis en place par moulage des vitrages ayant les formes et les dimensions les plus diverses. Pour cela, il est simplement nécessaire d'adapter le programme de parcours du robot de manutention à la forme considérée du vitrage.

Avec le procédé de l'invention, le vitrage à équiper de son encadrement doit être soigneusement positionné dans la zone de travail de la filière d'extrusion et doit être maintenu sur un support adapté à la forme du vitrage, de telle façon que le bord de ce vitrage soit pleinement accessible à la tête d'extrusion, au moins dans la partie qui doit être pourvue de l'encadrement. De préférence, le vitrage est équipé de l'encadrement sur la totalité de son périmètre. La filière d'extrusion doit alors être réalisée de telle façon que, conjointement avec le vitrage, elle délimite la section transversale d'extrusion. Cela signifie que la filière doit présenter, des deux côtés du vitrage, des surfaces d'étanchéité qui glissent sur les surfaces principales du vitrage et qui assurent une bonne étanchéité de la section transversale de la filière par rapport aux surfaces de verre. Cela est réalisé selon l'invention au moyen de réglettes d'étanchéité soumises à la pression de ressorts, qui sont amenées dans leur position d'étanchéité après le positionnement de la filière d'extrusion sur le bord du vitrage.

Dans les techniques antérieures, il était possible d'utiliser une filière d'extrusion possédant des surfaces d'étanchéité disposées de façon rigide. Cela exige toutefois que les vitrages devant être pourvus de l'encadrement présentent de très faibles tolérances d'épaisseur et que les dimensions intérieures de l'ouverture de la filière soient adaptées avec une grande précision aux dimensions d'épaisseur des vitrages. Suivant la viscosité et les autres propriétés de la matière polymère utilisée, l'interstice entre une surface d'étanchéité de la filière d'extrusion et la surface du verre peut varier d'environ un à cinq dixièmes de millimètre. Avec de telles filières d'extrusion pourvues d'une ouverture de filière rigide, le boudin de polymère extrudé est enlevé à cet endroit par le déplacement de la filière lorsqu'on enlève cette dernière du vitrage à la fin de l'opération d'extrusion, mais, à cet endroit, le profilé de l'encadrement peut être rectifié sans problème, selon des méthodes connues.

A l'aide du procédé de l'invention, il est possible de mettre en place par extrusion sur des vitrages des encadrements en polymère ayant une section transversale sensiblement en forme de L et dont la surface, sur l'un des côtés du vitrage, prolonge la surface principale du vitrage. Des encadrements de ce genre sont souhaités, par exemple, quand, pour des raisons d'aérodynamisme, des vitrages d'automobile doivent être montés à fleur de la carrosserie. Dans ce cas, la filière d'extrusion doit être réalisée et pilotée, lors de l'extrusion, de telle façon que la surface correspondante de délimitation de la filière soit en contact avec la zone périphérique du vitrage jusqu'au bord de la périphérie et prolonge radialement, vers l'extérieur, la surface principale du vitrage.

Il est de même possible d'équiper le vitrage, à l'aide du procédé de l'invention, d'un encadrement qui enserre le bord du vitrage sur ses trois faces. L'encadrement extrudé peut alors en principe présenter une section transversale quelconque.

D'autres particularités et avantages de l'invention apparaîtront dans la description qui va suivre, donnée avec référence aux dessins annexés, dans lesquels :

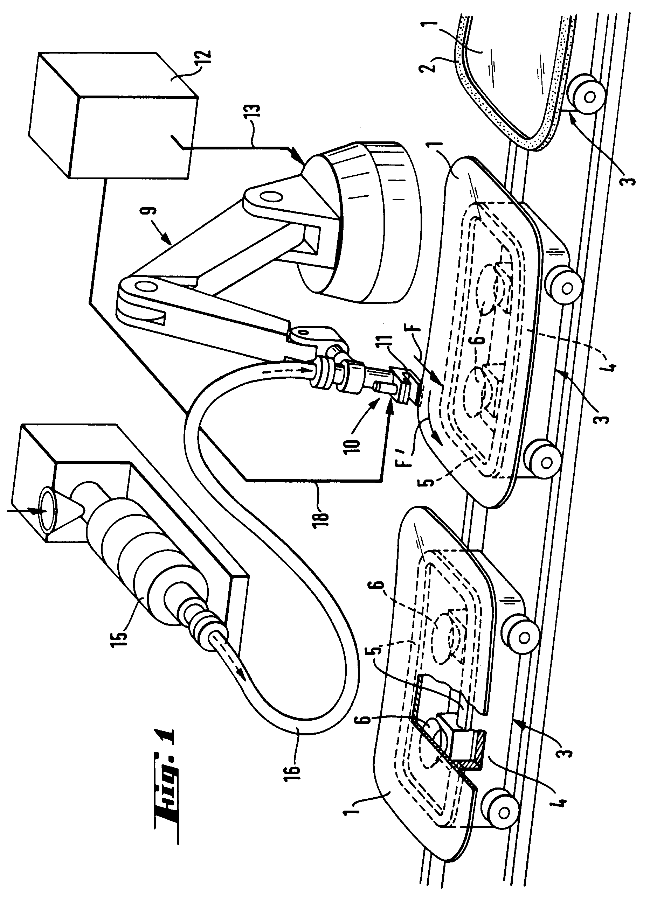

la Fig. 1 est une vue d'ensemble de l'installation servant à exécuter le procédé;
la Fig. 2 illustre une forme de réalisation d'une tête d'extrusion servant à mettre en place par extrusion un encadrement en polymère en forme de L;
la Fig. 3 montre une forme de réalisation d'une tête d'extrusion servant à mettre en place par extrusion un encadrement en forme de U enserrant le bord du vitrage, et,
la Fig. 4 représente un détail d'une tête d'extrusion convenant pour l'exécution du procédé.

La description qui suit concerne l'invention dans le cas de la mise en place par extrusion d'encadrements sur des vitrages, en particulier des vitrages d'automobiles. Toutefois, il y a lieu de signaler que, à l'aide du procédé de l'invention, d'autres objets en forme de plaque, par exemple des portes ou des éléments de construction en forme de plaque, peuvent être pourvus d'encadrements ou de joints d'étanchéité appropriés.

Les vitrages 1, qui sont des vitrages d'automobiles bombés dans le cas représenté et qui doivent être pourvus d'un encadrement profilé 2 fait d'un polymère, sont posés sur des supports mobiles 3 et sont amenés l'un après l'autre au poste de travail où l'encadrement profilé 2 est mis en place par extrusion. Les vitrages 1 sont tout d'abord préparés soigneusement dans un poste de travail précédent qui n'est pas représenté, où leur surface est nettoyée dans la zone dans laquelle l'encadrement doit être mis en place par extrusion et est revêtue d'un primaire d'adhérence qui est adapté à la matière plastique polymère à extruder.

Les vitrages 1 ainsi préparés sont alors placés, chacun dans une position précise sur le support 3 correspondant, où ils sont immobilisés par des dispositifs appropriés, par exemple, à dépression. Dans ce but, chaque support 3 comporte un châssis 4 correspondant à la forme du vitrage 1 et pourvu d'une garniture d'appui élastique 5 ainsi que de plusieurs ventouses 6 grâce auxquelles le vitrage 1 est pressé contre la garniture d'appui 5 du châssis 4. Les supports mobiles 3 sont alors amenés à une cadence déterminée au poste d'extrusion dans lequel le chariot-support 3 est soigneusement positionné de telle façon que le vitrage prenne avec précision sa position pour le travail à accomplir, par rapport au robot 9.

Dès que le vitrage 1 a atteint la position qu'il doit prendre pour l'extrusion, le robot 9 entre en action. Il amène la filière d'extrusion 11 dans sa position de travail en la déplaçant tout d'abord dans le sens de la flèche F au-dessus du bord du vitrage 1, puis en lui faisant suivre le bord du vitrage 1 dans le sens de la flèche F'. En même temps, la tête de filière 10 reçoit alors, par l'intermédiaire du câble de commande 18, des ordres de l'unité centrale de commande 12, ce qui met en action des fonctions supplémentaires de la filière, comme l'enclenchement et l'interruption de l'écoulement volumique du polymère, une modification de l'orifice de la filière ou d'autres fonctions.

Il est évident que le système représenté qui utilise un robot pour déplacer la filière d'extrusion le long du bord du vitrage peut être conçu plus simplement quand le déplacement est produit par un opérateur. Alors un système d'alimentation adapté permet de déposer en chaque endroit la quantité de matière voulue pour que le boudin soit régulier.

Dans le cas représenté, un polymère thermoplastique est formé sur le vitrage 1. Le polymère thermoplastique est fondu dans une extrudeuse 15 et amené à la tête d'extrusion 10 par un tuyau flexible sous pression chauffé 16. Comme polymère thermoplastique, on peut utiliser, par exemple, des élastomères de polyoléfines thermoplastiques en polypropylène isotactique et du caoutchouc d'éthylène-propylène-diène. Lors de l'utilisation de polymères thermoplastiques, il est indiqué de réchauffer les vitrages, par exemple à une température d'environ 150°C. Cependant, au lieu de polymères thermoplastiques, on peut aussi utiliser des réactifs, par exemple des réactifs pour polyuréthannes durcissables à l'humidité. Dans ce cas, l'extrudeuse 15 est remplacée par une pompe appropriée qui envoit la matière à extruder vers la tête d'extrusion 10, par le tuyau flexible sous pression 16.

Quand la tête d'extrusion 10, après avoir fait le tour du vitrage 1, est revenue dans sa position de départ, l'écoulement volumique du polymère est interrompu, la tête d'extrusion 10 est écartée, dans le sens opposé à celui de la flèche F, du vitrage 1 et le vitrage 1 pourvu de l'encadrement 2 est amené au poste de travail suivant, tandis que, en même temps, le vitrage 1 suivant pénètre dans le poste d'extrusion. Le cycle d'extrusion recommence alors.

Le point de transition entre le début et la fin du cordon de polymère extrudé présente inévitablement des déformations, à cause du déplacement radial de la filière à la fin de l'opération d'extrusion. Ce point de transition doit donc être retouché au cours d'une opération qui suit. La retouche du point de transition peut se faire, par exemple, suivant l'un des procédés faisant l'objet des documents EP 0 421 833 A2 ou EP 0 524 060 A1. La retouche de la zone de transition est particulièrement simple si l'on extrude un polymère thermoplastique car, dans ce cas, il suffit de procéder à un pressage complémentaire à l'aide d'un outil de pressage chauffé.

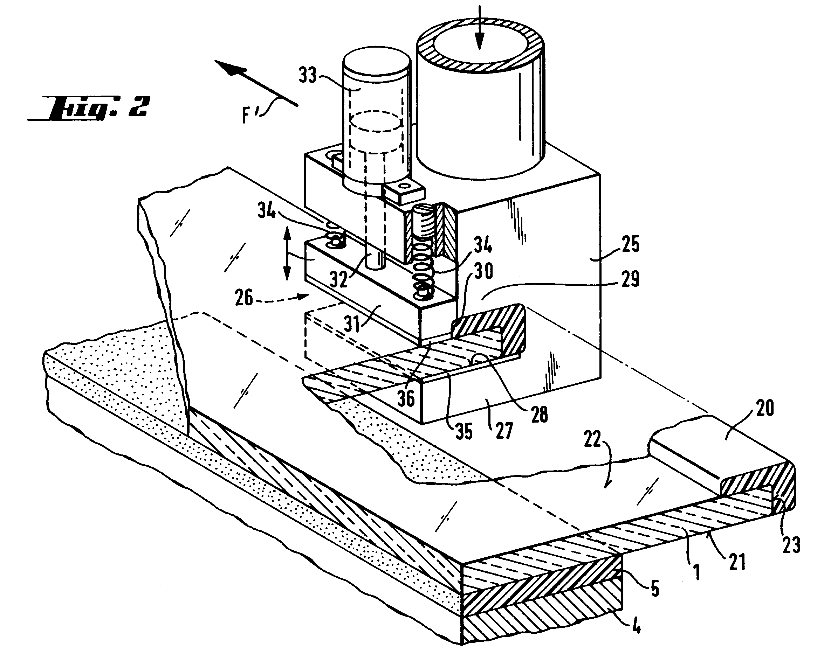

La Fig. 2 montre la structure de principe d'une filière d'extrusion utilisée quand un vitrage 1 doit être équipé d'un encadrement en polymère 20 qui, d'un côté du vitrage, c'est-à-dire du côté de la surface principale 21, prolonge par sa surface cette surface principale 21, au même niveau, mais, pour le reste, a une section transversale en forme de L, les ailes du profilé d'encadrement étant en contact respectivement avec la surface principale 22 et avec le chant périphérique 23 du vitrage et étant solidement fixées à la surface du verre.

La filière d'extrusion 25 présente une échancrure 26 avec une section en forme de U, continue dans la direction du déplacement, dans laquelle s'engage le bord du vitrage 1. Cette échancrure 26 en forme de U est limitée, du côté inférieur, par le mors 27 dont la surface supérieure 28, pendant l'opération d'extrusion, est en contact avec la surface principale 21 du vitrage 1. Du côté supérieur, l'échancrure 26 de la filière est formée par le mors 29.

Dans la paroi arrière de la filière, vue dans le sens du déplacement de la filière 25, se trouve l'orifice calibré de la filière, qui détermine la section transversale du cordon de polymère extrudé. L'ouverture du U de la filière est limitée par la paroi 30 de la réglette mobile 31. Cette réglette 31 est montée de façon à être mobile dans la direction verticale. Elle peut être remontée par l'intermédiaire de la tige 32, à l'aide du vérin pneumatique ou hydraulique 33. En position basse, la réglette 31 est pressée contre la surface 22 du vitrage 1 par des ressorts hélicoïdaux 34 ou d'autres moyens produisant le même effet. La force d'appui exercée par les ressorts 34 doit être réglée de telle façon qu'une bonne étanchéité des surfaces de la filière 25 qui glissent sur les deux faces du vitrage 1 soit assurée. D'autre part, la pression d'appui ne doit pas être trop forte afin que les forces de frottement ne deviennent pas trop importantes lors de l'opération d'extrusion, ce qui pourrait, d'une part, gêner le mouvement de la filière et, d'autre part, user les surfaces de glissement de cette filière.

Le vérin 33 qui actionne la réglette d'étanchéité 31 est également piloté par l'unité centrale de commande 12. La réglette d'étanchéité 31 est amenée dans sa position finale haute par l'intermédiaire du vérin 33 quand la filière 25 est déplacée de sa position de repos vers sa position de travail sur le bord du vitrage et quand la filière, au terme de l'opération d'extrusion, est ramenée dans sa position de repos à côté du vitrage.

Sur chacune des surfaces de glissement de la filière 25, à savoir la surface 27 de l'échancrure 26 et la face inférieure de la réglette 31, est disposée une garniture 35, 36 faite d'une matière élastique ayant de bonnes propriétés de glissement sur le verre. Ces garnitures 35, 36 servent à mieux étancher l'ouverture de la filière par rapport au vitrage et à faciliter le glissement. Ces garnitures 35, 36 sont avantageusement montées de manière à pouvoir être remplacées rapidement.

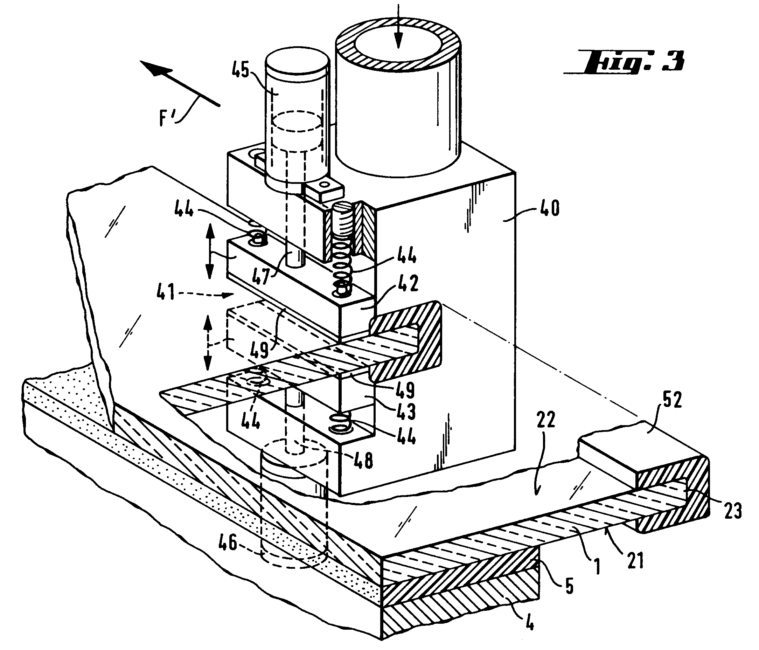

La filière 40 représentée sur la Fig. 3 est fondamentalement réalisée d'une façon analogue à la filière 25 décrite à l'aide de la Fig. 2, mais elle s'en distingue du fait qu'elle est pourvue, des deux côtés de l'échancrure 41 en forme de U, de réglettes d'étanchéité mobiles 42, 43. Les réglettes d'étanchéité 42, 43 sont ici aussi pressées contre les deux surfaces principales du vitrage 1 par des ressorts hélicoïdaux 44. Les vérins pneumatiques ou hydrauliques 45, 46 amènent les réglettes d'étanchéité par l'intermédiaire de tiges 47, 48, dans leur position finale ouverte, quand la filière est amenée de sa position d'attente à sa position de travail sur le bord du vitrage et quand, au terme de l'opération d'extrusion, elle est retirée du vitrage 1. Des garnitures amovibles 49, faites d'une matière élastique ayant de bonnes propriétés de glissement sur le verre, sont également placées sur les surfaces de glissement des deux réglettes d'étanchéité 42, 43.

La filière 40 convient pour l'extrusion d'un encadrement 52 qui enserre la partie périphérique d'un vitrage, sur les trois côtés, avec une section en U.

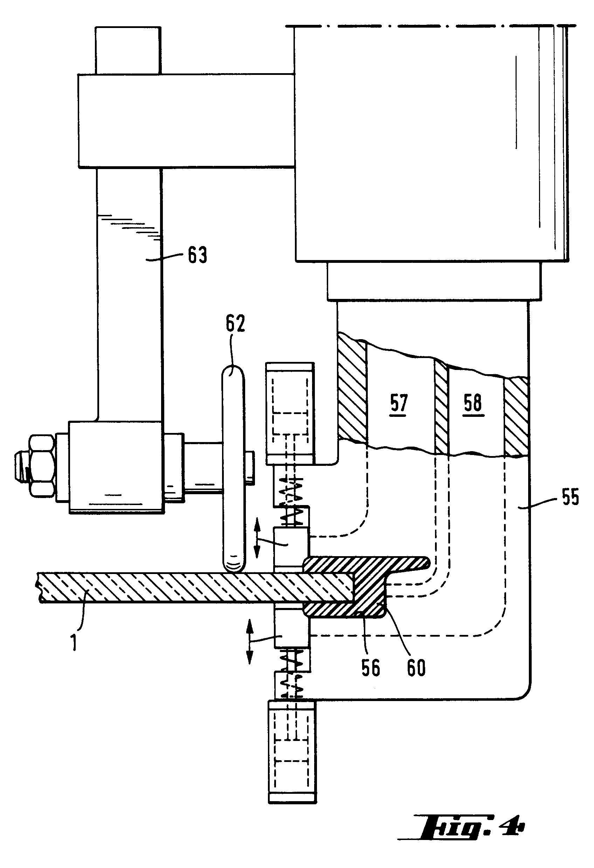

La Fig. 4 représente une filière 55 réalisée suivant le principe décrit plus haut, dans sa position de travail dans laquelle l'orifice calibré 56 de la filière est alimenté, en polymère à extruder par deux conduits séparés 57 et 58. Le débit de polymère dans chacun de ces conduits peut être réglé séparément par des dispositifs d'arrêt appropriés installés dans ces conduits ou dans les conduites qui les alimentent en polymère. Il devient ainsi possible de fournir à différentes parties de la section de l'orifice 56 de la filière des débits volumiques différents si, comme dans le cas représenté, la section transversale du profilé 60 de l'encadrement n'est pas symétrique et que, par conséquent, une plus grande quantité de matière est nécessaire dans une partie de l'orifice de la filière que dans une autre partie.

Dans ce cas, un galet d'appui 62 est, en outre, monté sur la tête d'extrusion portant la filière 55, par l'intermédiaire d'un support 63. Ce galet d'appui 62 sert à compenser les tolérances de forme du vitrage 1 dans la direction perpendiculaire à la surface du vitrage, en particulier dans le cas des vitrages bombés. Dans ce but, la tête d'extrusion est montée de façon à pouvoir bouger de quelques millimètres dans la direction verticale, de telle sorte que la compensation nécessaire des tolérances s'effectue par l'intermédiaire du galet d'appui 62.

## Revendications

1. Procédé de fabrication d'un vitrage avec un encadrement en polymère, mis en place par moulage, qui enserre le vitrage sur au moins deux côtés (22, 23) présentant les étapes suivantes :
a) on présente le vitrage (1) au poste de travail où il est maintenu immobile à l'aide d'un dispositif de support (3), son bord dépassant librement des surfaces d'appui du support (3),
b) on approche une filière d'extrusion (25) du bord du vitrage (1), celle-ci possédant une échancrure (26) avec une section en forme de U dans laquelle s'engage le bord du vitrage,
c) on presse contre au moins une surface (22) du vitrage une réglette mobile (31) dont la paroi (30) limite l'ouverture du U de la filière, la paroi arrière de celle-ci possédant l'orifice calibré qui détermine la section transversale du cordon de polymère extrudé,
d) après avoir enclenché l'écoulement du polymère, on déplace la filière en lui faisant suivre le bord du vitrage (1),
e) au terme de l'opération d'extrusion, on ramène la réglette mobile (31) dans sa position finale écartée et la filière dans sa position de repos à côté du vitrage.

2. Procédé selon la revendication 1, **caractérisé en ce que** lorsqu'une seule réglette mobile (31) équipe la filière d'extrusion (25), le mors (27) de l'échancrure (26) en forme de U a, lors des étapes c) et d), sa surface (28) en contact avec la surface (21) du vitrage.

3. Procédé selon la revendication 1, **caractérisé en ce que** lorsque deux réglettes mobiles (42, 43) équipent la filière d'extrusion (40), celles-ci sont pressées sur les deux surfaces (21, 22) du vitrage lors des étapes c) et d) du procédé et sont dans leur position finale ouverte lors des étapes b) et e) du procédé.

4. Dispositif pour l'exécution du procédé suivant l'une des revendications 1 à 3, comportant un robot de manutention (9), un système de supports et de déplacement (3, 4, 5, 6) maintenant le vitrage (1) dans la position de travail, un dispositif (15, 16) qui fournit le polymère à extruder, une filière d'extrusion (11, 25, 40, 55) qui enserre le bord du vitrage (1), est pourvue sur toute sa longueur d'une échancrure (26, 41) en forme de U, avec un orifice de filière calibré pratiqué dans sa face arrière, vue dans le sens du déplacement de la filière, **caractérisé en ce que** l'un au moins des deux mors de l'échancrure en U de la filière est pourvu, à son extrémité avant, d'une réglette d'étanchéité (31) mobile perpendiculairement à la surface principale correspondante du vitrage et qui, dans la position de travail de la filière, s'appuie sur la surface du vitrage.

5. Dispositif suivant la revendication 4, **caractérisé en ce que** la filière d'extrusion (25) présente, d'un côté de l'échancrure (26) en forme de U sur toute la longueur de la filière, une réglette d'étanchéité (31) mobile et, de l'autre côté de l'échancrure (26) en forme de U, une surface de glissement (28) plane destinée au contact glissant avec la surface principale (21) du vitrage.

6. Dispositif suivant l'une des revendications 4 ou 5, **caractérisé en ce que** les surfaces de la filière d'extrusion (25, 40) glissant, lors de l'opération d'extrusion, sur le vitrage (1), sont pourvues d'une garniture élastique (35, 36) ayant de bonnes propriétés de glissement sur la surface du verre.

7. Dispositif suivant l'une des revendications 4 à 6, **caractérisé en ce que** la filière d'extrusion (55) présente deux conduits (57, 58) qui alimentent chacun une partie différente de la section transversale de l'orifice (56) de la filière au moyen de polymère à extruder, les débits volumiques de ce polymère à extruder pouvant être réglés indépendamment l'un de l'autre dans ces conduits.

8. Dispositif suivant l'une des revendications 4 à 7, **caractérisé en ce que** la tête d'extrusion portant la filière d'extrusion (55) est montée de façon à être mobile dans la direction perpendiculaire au vitrage (1) et est pourvue d'un galet d'appui (62) qui s'appuie sur le vitrage (1) pour compenser les tolérances de forme du vitrage (1).

## Claims

1. Process for the production of a glazing with a polymer frame, put into place by moulding and which encloses the glazing on at least two sides (22, 23), having the following stages:
a) the glazing (1) is supplied to the work station where it is kept stationary with the aid of a support device (3), its edge projecting freely beyond the bearing surfaces of the support (3),
b) an extrusion die (25) is moved towards the edge of the glazing (1), the latter having a notch (26) with a U-shaped cross-section and in which engages the edge of the glazing,
c) against at least one surface (22) of the glazing is pressed a mobile ledge (31), whose wall (30) limits the opening of the U of the die, the rear wall of the latter having the gauged orifice, which determines the cross-section of the extruded polymer bead,
d) after initiating the flow of polymer, the die is moved making it follow the edge of the glazing (1),
e) during the extrusion Operation, the mobile ledge (31) is brought into its final, spaced apart position and the die into its rest position close to the glazing.

2. Process according to claim 1, characterized in that when a single mobile ledge (31) equips the extrusion die (25), the jaw (27) of the U-shaped notch (26) has, during stages c) and d), its surface (28) in contact with the glazing surface (21).

3. Process according to claim 1, characterized in that when two mobile ledges (42, 43) equip the extrusion die (40), they are pressed onto the two surfaces (21, 22) of the glazing during stages c) and d) of the process and are in their final, open position during stages b) and e) of the process.

4. Device for performing the process according to one of the claims 1 to 3, having a handling robot (9), a support and displacement system (3, 4, 5, 6) maintaining the glazing (1) in the operative position, a mechanism (15, 16) supplying the polymer to be extruded, an extrusion die (11, 25, 40, 55) enclosing the edge of the glazing (1), is provided over its entire length with a U-shaped notch (26, 41), with a gauged die orifice made in its rear face, seen in the die displacement direction, characterized in that at least one of the two jaws of the U-shaped notch of the die is provided, at its front end, with a sealing ledge (31) movable perpendicular to the corresponding, main surface of the glazing and which, in the operative position of the die, bears on the glazing surface.

5. Device according to claim 4, characterized in that the extrusion die (25), has on one side of the U-shaped notch (26) over the entire die length, a mobile sealing ledge (31) and, on the other side of the U-shaped notch (26), a planar sliding surface (28) for sliding contact with the main surface (21) of the glazing.

6. Device according to one of the claims 4 or 5, characterized in that the surfaces of the extrusion die (25, 40) sliding, during the extrusion operation, on the glazing (1), are provided with an elastic covering (35, 36) having good sliding properties on the glass surface.

7. Device according to one of the claims 4 to 6, characterized in that the extrusion die (55) has two ducts (57, 58), each of which supplies a different part of the cross-section of the orifice (56) of the die by means of the polymer to be extruded, the volume flow rates of the polymer to be extruded being regulatable independently of one another in said ducts.

8. Device according to one of the claims 4 to 7, characterized in that the extrusion head carrying the extrusion die (55) is installed so as to be mobile in the direction perpendicular to the glazing (1) and is provided with a bearing roller (62), which bears on the glazing (1) in order to compensate shape tolerances of said glazing (1).

## Patentansprüche

1. Verfahren zum Herstellen einer Glasscheibe mit einer angeformten Polymer-Umrahmung, welche die Glasscheibe auf mindestens zwei Seiten (22, 23) umschließt, umfassend folgende Abschnitte :
a) die Glasscheibe (1) wird in einer Bearbeitungsstation mit Hilfe einer Tragvorrichtung (3) stationär derart gehalten, daß ihr Rand frei über die Stützfläche (4,5) der Tragvorrichtung (3) übersteht,
b) eine Extrusionsdüse (25), welche ein Düsenmaul mit einem U-förmigen Querschnitt hat, wird an den Rand der Glasscheibe (1) angenähert, der in diesen U-förmigen Querschnitt eingreift,
c) gegen wenigstens eine Fläche (22) der Glasscheibe (1) wird eine bewegliche Dichtleiste (31) angedrückt, deren Seite (30) die Öffnung des U der Düse begrenzt, deren Rückwand die kalibrierte Öffnung besitzt, welche den Querschnitt des extrudierten Polymerstrangs bestimmt,
d) nach dem Beginn des Ausströmens des Polymers wird die Düse verschoben, indem man sie dem Rand der Glasscheibe (1) folgen läßt,
e) am Ende des Extrusionsvorgangs wird die bewegliche Leiste (31) in ihre abgerückte Endlage und die Düse in ihre Ruhestellung seitlich von der Glasscheibe gebracht.

2. Verfahren nach Anspruch 1, **dadurch gekennzeichnet,** daß bei Verwendung einer einzigen beweglichen Dichtleiste (31) mit der Extrusionsdüse (25) die Fläche (28) der Backe (27) des U-förmigen Düsenmauls (26) während der Abschnitte c) und d) in Kontakt mit der Hauptfläche (21) der Glasscheibe steht.

3. Verfahren nach Anspruch 1 **dadurch gekennzeichnet,** daß bei Verwendung zweier beweglicher Dichtleisten (42, 43) mit der Extrusionsdüse (40) diese während der Verfahrensschritte c) und d) auf die beiden Hauptflächen (21, 22) der Glasscheibe aufgedrückt werden und während der Verfahrensschritte b) und e) in ihrer geöffneten Endstellung stehen.

4. Vorrichtung zum Ausführen des Verfahrens nach einem der Ansprüche 1 bis 3, umfassend einen Handhabungsroboter (9), ein die Glasscheibe (1) in der Bearbeitungsposition haltendes System Träger- und Transportsystem (3, 4, 5, 6), eine Einrichtung (15, 16) zum Liefern des zu extrudierenden Polymers, eine den Rand der Glasscheibe (1) umgreifende Extrusionsdüse (11, 25, 40, 55), die auf ihrer ganzen Länge mit einem U-förmigen Düsenmaul (26, 41) versehen ist mit einer in seine Rückseite eingeformten kalibrierten Düsenöffnung, gesehen in der Bewegungsrichtung der Düse, **dadurch gekennzeichnet,** daß mindestens eine der beiden Backen des U-förmigen Düsenmauls an ihrem vorderen Ende mit einer senkrecht zur korrespondierenden Hauptfläche der Glasscheibe beweglichen Dichtleiste (31) versehen ist, welche sich in Arbeitsstellung der Düse auf der Hauptfläche der Glasscheibe abstützt.

5. Vorrichtung nach Anspruch 4 **dadurch gekennzeichnet,** daß die Extrusionsdüse (25) auf einer Seite des U-förmigen Düsenmauls (26) über die gesamte Länge der Düse eine bewegliche Dichtleiste (31) aufweist und auf der anderen Seite des U-förmigen Düsenmauls (26) eine ebene, zum gleitenden Kontakt mit der Hauptfläche (21) der Glasscheibe bestimmte Gleitfläche (28) aufweist.

6. Vorrichtung nach einem der Ansprüche 4 oder 5, **dadurch gekennzeichnet,** daß die beim Extrusionsvorgang auf der Glasscheibe (1) gleitenden Flächen der Extrusionsdüse (25, 40) mit einer elastischen Auflage (35, 36) mit guten Gleiteigenschaften auf der Glasfläche versehen sind.

7. Vorrichtung nach einem der Ansprüche 4 bis 6, **dadurch gekennzeichnet,** daß die Extrusionsdüse (55) zwei jeweils einen anderen Teil des Düsenquerschnitts der Düsenöffnung (56) mit dem zu extrudierenden Polymer versorgende Kanäle (57, 58) aufweist, in denen die Volumenströme des zu extrudierenden Polymers unabhängig voneinander regelbar sind.

8. Vorrichtung nach einem der Ansprüche 4 bis 8, dadurch gekennzeichnet, daß der die Extrusionsdüse (55) tragende Extrusionskopf in Richtung senkrecht zur Glasscheibe (1) beweglich gelagert und mit einem sich auf der Glasscheibe (1) abstützenden Stützrad (62) zum Ausgleich von Formtoleranzen der Glasscheibe (1) versehen ist.
